# EUROPEAN PATENT APPLICATION

(11) **EP 3 340 373 A1**
(43) Date of publication of application: **27.06.2018**
(21) Application number: 17206493.3
(22) Date of filing: 11.12.2017
(51) Int. Cl.: H01Q 1/12, H01Q 1/32

(54) **VEHICLE ANTENNA SYSTEM**

(30) Priority: 21.12.2016 JP 2016248376
(71) Applicant: TOYOTA JIDOSHA KABUSHIKI KAISHA, Toyota-shi, Aichi-ken, 471-8571 (JP)
(72) Inventor: SASAKI, Akira, Aichi-ken, 471-8571 (JP)
(74) Representative: J A Kemp

(57) **Abstract**

A vehicle antenna system including a mobile phone antenna (10) provided in a front header (2) of a vehicle (50), a dedicated short range communication antenna (20) provided in a windshield (3) of the vehicle (50), and a global positioning system antenna (30) provided in the inside of a front instrument panel (53) of the vehicle (50). For example, the front header (2) includes a front surface (2a) to which the windshield (3) of the vehicle (50) is attached, and a rear surface (2b) opposite to the front surface (2a), and the mobile phone antenna (10) is arranged on the rear surface (2b) side.

## Description

### BACKGROUND OF THE INVENTION

### 1. Field of the Invention

The present disclosure relates to a vehicle antenna system.

### 2. Description of Related Art

In the related art, a shark fin type antenna device for a vehicle including a mobile phone antenna, an inter-vehicle communication antenna, and a global positioning system (GPS) antenna has been known (see, for example, Japanese Unexamined Patent Application Publication No. 2015-139211 (JP 2015-139211 A)).

### SUMMARY OF THE INVENTION

However, since the antenna device described above is mounted on an upper surface of a roof of the vehicle, a vehicle height or air resistance increases.

Accordingly, an aspect of the present disclosure provides a vehicle antenna system including a plurality of antennas that is capable of reducing a vehicle height and air resistance as compared with an aspect in which an antenna is provided on an upper surface of a roof of a vehicle.

A first aspect of the present disclosure relates to a vehicle antenna system including a mobile phone antenna provided in a front header of a vehicle, and a dedicated short range communication antenna provided in a windshield of the vehicle.

According to the aspect, since the mobile phone antenna is provided in the front header of the vehicle, the mobile phone antenna does not protrude to the upper surface of the roof of the vehicle. Therefore, it is possible to reduce a vehicle height or air resistance, as compared with an aspect in which the mobile phone antenna is provided on the upper surface of the roof of the vehicle. Further, according to the aspect, since the dedicated short range communication antenna is provided on the windshield of the vehicle, the dedicated short range communication antenna does not protrude to the upper surface of the roof of the vehicle. Therefore, it is possible to reduce the vehicle height or the air resistance, as compared with an aspect in which the dedicated short range communication antenna is provided on the upper surface of the roof of the vehicle.

In the vehicle antenna system according to the first aspect of the present disclosure, the front header may include a front surface to which the windshield of the vehicle is attached, and a rear surface opposite to the front surface, and the mobile phone antenna may be arranged on the rear surface side.

By arranging the mobile phone antenna on the rear surface side of the front header, a possibility of the mobile phone antenna being damaged can be greatly reduced even when the vehicle is overturned or collides.

In the vehicle antenna system according to the first aspect of the present disclosure, the mobile phone antenna may be arranged between the front header and an overhead console arranged in a front center portion of a cabin ceiling of the vehicle in a front view of the windshield.

By arranging the mobile phone antenna between the front header and the overhead console in a plan view of the windshield, blocking a forward field of vision of a driver of the vehicle can be avoided.

In the vehicle antenna system according to the first aspect of the present disclosure, the mobile phone antenna may include a substrate on which a radiation element and a ground portion are formed, and the ground portion may be grounded to the front header.

Since stability of a potential of the ground portion is increased by grounding the ground portion to the front header, an antenna gain of the mobile phone antenna can be improved.

The vehicle antenna system according to the first aspect of the present disclosure may further include a terrestrial digital television broadcast antenna provided in the windshield. The terrestrial digital television broadcast antenna may be located between the mobile phone antenna and the dedicated short range communication antenna in a front view of the windshield.

According to the aspect, the mobile phone antenna, the dedicated short range communication antenna, and the terrestrial digital television broadcast antenna can be arranged apart from one another. Therefore, it is possible to further reduce a degree of interference of radio waves among the mobile phone antenna, the dedicated short range communication antenna, and the terrestrial digital television broadcast antenna.

The vehicle antenna system according to the first aspect of the present disclosure may further include a first terrestrial digital television broadcast antenna provided in the windshield; and a second terrestrial digital television broadcast antenna provided in the windshield. The first terrestrial digital television broadcast antenna may be located between the mobile phone antenna and the dedicated short range communication antenna in a front view of the windshield, and the mobile phone antenna may be located between the first terrestrial digital television broadcast antenna and the second terrestrial digital television broadcast antenna in the front view of the windshield.

According to the aspect, the mobile phone antenna, the dedicated short range communication antenna, the first terrestrial digital television broadcast antenna, and the second terrestrial digital television broadcast antenna can be arranged apart from one another. Therefore, it is possible to further reduce a degree of interference of radio waves among the mobile phone antenna, the dedicated short range communication antenna, the first terrestrial digital television broadcast antenna, and the second terrestrial digital television broadcast antenna.

The vehicle antenna system according to the first aspect of the present disclosure may further include a GPS antenna provided in the inside of a front instrument panel of the vehicle.

According to the aspect, since the GPS antenna is provided in the inside of the front instrument panel of the vehicle, the GPS antenna does not protrude to the upper surface of the roof of the vehicle. Therefore, it is possible to reduce the vehicle height or the air resistance, as compared with an aspect in which the GPS antenna is provided on the upper surface of the roof of the vehicle.

A second aspect of the present disclosure relates to a vehicle antenna system including a dedicated short range communication antenna provided in a windshield of a vehicle, and a GPS antenna provided in the inside of a front instrument panel of the vehicle.

A third aspect of the present disclosure relates to a vehicle antenna system including a mobile phone antenna provided on a front header of a vehicle, and a GPS antenna provided in the inside of a front instrument panel of the vehicle.

In the vehicle antenna system according to the first to third aspects of the present disclosure, the GPS antenna may be arranged between the front header of the vehicle and the storage position of a wiper that wipes a windshield of the vehicle when the vehicle is seen from above .

According to the aspect, a degree of blockade of radio waves transmitted and received by the GPS antenna due to a conductive member such as the wiper or the front header is further reduced. Therefore, it is possible to further reduce a degree of impairment of directivity of the GPS antenna in a longitudinal direction of the vehicle.

In the vehicle antenna system according to the first and second aspects of the present disclosure, the dedicated short range communication antenna may be arranged in a non-wiping area other than a wiping area of a wiper that wipes the windshield in an area of the windshield of the vehicle.

According to the aspect, a degree of blockade of radio waves transmitted and received by the dedicated short range communication antenna due to a wiping operation of the wiper is further reduced. Therefore, it is possible to further reduce a degree of impairment of directivity of the dedicated short range communication antenna in a longitudinal direction of the vehicle.

With the vehicle antenna system according to the aspect of the present disclosure, it is possible to suppress a vehicle height or air resistance even when a plurality of antennas is included.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a diagram illustrating an example of a configuration of a vehicle antenna system;
FIG. 2 is a diagram illustrating an example of a roof-side frame structure of a vehicle;
FIG. 3 is a cross-sectional view illustrating an example of an arrangement of a mobile phone antenna;
FIG. 4 is a diagram illustrating an example of an arrangement of a dedicated short range communication antenna and a terrestrial digital television broadcast antenna; and FIG. 5 is a diagram illustrating an example of an arrangement of a GPS antenna.

### DETAILED DESCRIPTION OF EMBODIMENTS

Hereinafter, embodiments of the present disclosure will be described with reference to the drawings.

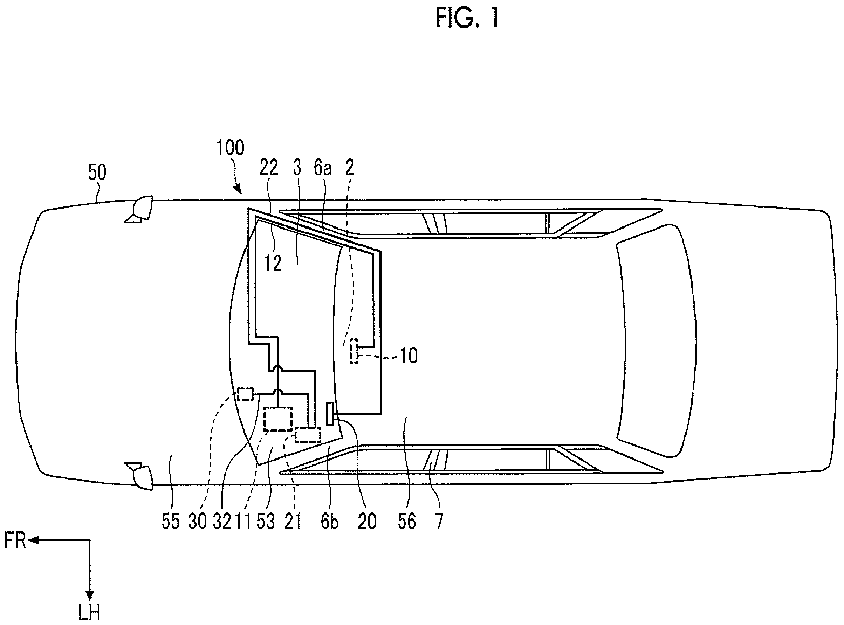

FIG. 1 is a diagram illustrating an example of a configuration of a vehicle antenna system, FIG. 1 is a diagram illustrating a vehicle 50 in a view from above a vehicle 50. "FR" indicates the front of the vehicle 50, and "LH" indicates the left side of the vehicle 50.

A vehicle antenna system 100 illustrated in FIG. 1 is an example of the antenna system mounted on the vehicle 50, and includes a plurality of antennas that transmits or receives radio waves to or from the outside of the vehicle 50. The vehicle antenna system 100 includes a phone antenna 10, a dedicated short range communication antenna 20, and a GPS antenna 30.

The phone antenna 10 in the embodiment of the present disclosure is an example of a mobile phone antenna that is an antenna for a mobile phone. The phone antenna 10 is provided in a front header 2 of the vehicle 50. The phone antenna 10 is connected to a communication module 11 via a cable 12. The communication module 11 is provided in the inside of a front instrument panel 53 in a vehicle cabin of the vehicle 50.

The phone antenna 10 is an example of an antenna that transmits or receives radio waves (for example, radio waves in a frequency band having a center frequency of 800 MHz), which is used in a mobile phone communicating according to a predetermined wireless communication standard. Specific examples of the wireless communication standard include 3rd Generation (3G), Long Term Evolution (LTE), and 4th Generation (4G).

The communication module 11 is a transmission and reception device that uploads data (for example, position data of the vehicle 50) detected in the vehicle 50 to a predetermined center using the phone antenna 10 or acquires data distributed from the predetermined center using the phone antenna 10. For acquisition of the position data of the vehicle 50, a GPS antenna is connected to or built into the communication module 11. The GPS antenna connected to or built into the communication module 11 is an antenna different from the GPS antenna 30 and may be the GPS antenna 30.

The dedicated short range communication antenna 20 in the embodiment of the present disclosure is an example of an antenna for dedicated short range communication. The dedicated short range communication antenna 20 is provided in a windshield 3 of the vehicle 50, The dedicated short range communication antenna 20 is connected to an electronic control unit (ECU) 21 via a cable 22. The ECU 21 is provided in the inside of the front instrument panel 53.

The dedicated short range communication antenna 20 is an example of an antenna for dedicated short range communication (DSRC). In the dedicated short range communication, for example, radio waves in a frequency band having a center frequency of 760 MHz, 5.8 GHz, or 5.9 GHz are used. The dedicated short range communication antenna 20 is an example of an antenna for transmitting or receiving radio waves in a frequency band as described above. The dedicated short range communication is used in Intelligent Transport Systems (ITS), Vehicle to Everything (V2X) communication, or the like. More specifically, the dedicated short range communication is used in inter-vehicle communication between the own vehicle and another vehicle, road to vehicle communication between an infrastructure and the own vehicle, pedestrian to vehicle communication between a pedestrian and the own vehicle, or the like.

The ECU 21 is a control unit that executes driving assistance control to prevent collide with another vehicle by transmitting behavior data indicating behavior of the vehicle 50 to the other vehicle using the dedicated short range communication antenna 20 or receiving the same data from the other vehicle using the dedicated short range communication antenna 20. Alternatively, the ECU 21 is a control unit that transmits or receives data that is used in an automatic toll collection system to or from a passage gate using the dedicated short range communication antenna 20.

The GPS antenna 30 in the embodiment of the present disclosure is an example of the GPS antenna. The GPS antenna 30 is provided in the inside of the front instrument panel 53. The GPS antenna 30 is connected to the ECU 21 via a cable 32.

The ECU 21 has a function of detecting position data indicating the position of the vehicle 50 by receiving radio waves from a GPS satellite using the GPS antenna 30. The ECU 21 supports driving of the vehicle 50 with high precision, for example, using the position data for the driving assistance control described above.

Although the GPS antenna 30 is connected to the same ECU 21 as the ECU to which the dedicated short range communication antenna 20 is connected, the GPS antenna 30 may be connected to an ECU different from the ECU to which the dedicated short range communication antenna 20 is connected according to the use of the GPS antenna 30.

The cables 12, 22 include a portion that is wired along a right front pillar 6a among right and left front pillars (so-called A-pillars) of the vehicle 50. At least one of the cables 12, 22 may be wired along a left front pillar 6b. A specific example of the cables 12, 22, 32 includes a coaxial cable.

In FIG. 1, the cables 12, 22, 32 are illustrated by solid lines so as to make it easy to see an example of wiring, but are actually wired not to be viewed by an occupant from the viewpoint of merchantability, designability, or the like.

As described above, according to the vehicle antenna system 100, since the phone antenna 10 is provided in the front header 2 of the vehicle 50, the phone antenna 10 does not protrude to the upper surface of the roof 56 of the vehicle 50. Therefore, it is possible to reduce the vehicle height or the air resistance, as compared with an aspect in which the phone antenna 10 is provided on the upper surface of the roof 56. Further, according to the vehicle antenna system 100, since the dedicated short range communication antenna 20 is provided on the windshield 3 of the vehicle 50, the dedicated short range communication antenna 20 does not protrude to the upper surface of the roof 56 of the vehicle 50. Therefore, it is possible to reduce the vehicle height or the air resistance, as compared with an aspect in which the dedicated short range communication antenna 20 is provided on the upper surface of the roof 56. Further, according to the vehicle antenna system 100, since the GPS antenna 30 is provided in the inside of the front instrument panel 53 of the vehicle 50, the GPS antenna 30 does not protrude to the upper surface of the roof 56 of the vehicle 50. Therefore, it is possible to reduce the vehicle height or the air resistance, as compared with an aspect in which the GPS antenna 30 is provided on the upper surface of the roof 56.

Next, the configuration of the vehicle antenna system 100 will be described in more detail.

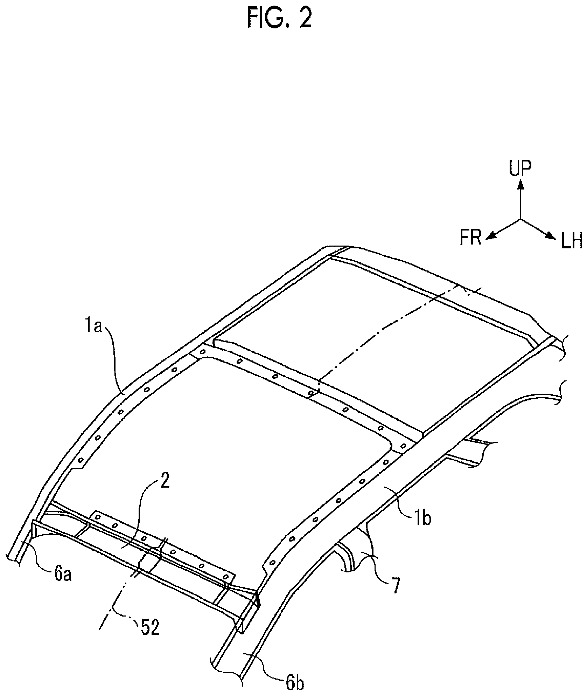

FIG. 2 is a diagram illustrating an example of a roof-side frame structure of the vehicle. In FIG. 2, "FR" indicates a front of the vehicle 50, "LH" indicates the left side of the vehicle 50, and "UP" indicates an upper side of the vehicle 50.

The frame structure illustrated in FIG. 2 includes a pair of right and left side rails 1a, 1b, a pair of right and left center pillars 7 (solely the left is illustrated), a pair of right and left front pillars 6a, 6b, and the front header 2.

The side rails 1a, 1b are steel plate members that extend in a longitudinal direction of the vehicle 50. The center pillar 7 is a steel plate member that extends in a vertical direction of the vehicle 50 in a middle portion in the longitudinal direction of the vehicle 50. The front pillars 6a, 6b are steel plate members that extend to the front side of the vehicle 50 with respect to the side rails 1a, 1b. A vehicle rear side end portion of the right front pillar 6a is connected to a vehicle front side end portion of the side rail 1a, and a vehicle rear side end portion of the left front pillar 6b is connected to a vehicle front side end portion of the side rail 1b.

The front header 2 is a steel plate member that extends in a vehicle width direction (a lateral direction of the vehicle 50) on the front side of the vehicle 50 with respect to the side rails 1a, 1b. A vehicle right side end portion of the front header 2 is connected to the vehicle rear side end portion of the right front pillar 6a and the vehicle front side end portion of the side rail 1a. The vehicle left side end portion of the front header 2 is connected to a vehicle rear side end portion of the left front pillar 6b and a vehicle front side end portion of the side rail 1b.

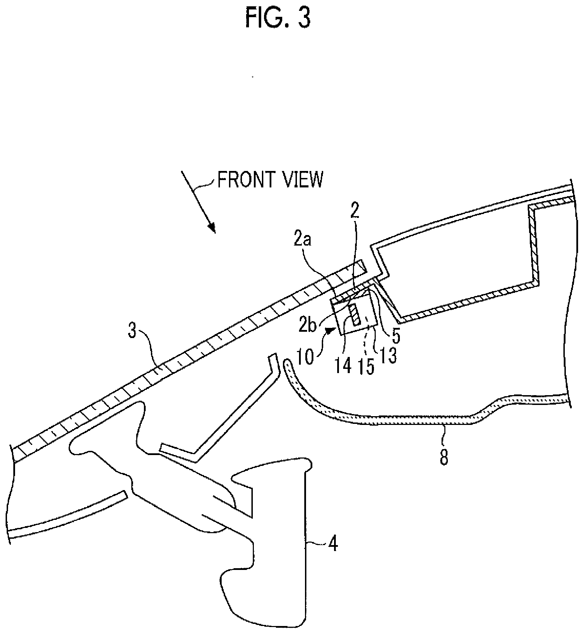

FIG. 3 is a cross-sectional view illustrating an example of an arrangement of the mobile phone antenna. FIG. 3 illustrates a cross-section perpendicular to a straight line in a lateral direction of the vehicle 50. The front header 2 is a flat plate-like portion including a front surface 2a to which the windshield 3 is attached and a rear surface 2b on the side opposite to the front surface 2a. An upper edge portion of the windshield 3 is attached to the front surface 2a. The phone antenna 10 that is an example of the mobile phone antenna is arranged on the rear surface 2b side.

By arranging the phone antenna 10 on the rear surface 2b side of the front header 2, a possibility of the phone antenna 10 being damaged can be greatly reduced even when the vehicle 50 is overturned due to a rollover or the like, or collides from the front or the side. The arrangement of the phone antenna 10 on the rear surface 2b side of the front header 2 is particularly advantageous when the phone antenna 10 is used for an emergency call service informing a predetermined center of a collision accident or the like of the vehicle 50.

The phone antenna 10 illustrated in FIG. 3 is arranged between the front header 2 and an overhead console 8 in a front view of the windshield 3. The overhead console 8 is an example of a console that is arranged at a front center portion of a cabin ceiling of the vehicle 50. The overhead console 8 is provided with at least one of a map lamp, a switch for opening and closing a sunroof, an accessory case, and a watch. When there is any member or protrusion on the side in the vehicle width direction of the overhead console 8, it is easy for the member or the protrusion to obstruct a forward field of vision of the driver of the vehicle 50. On the other hand, when the phone antenna 10 is arranged between the front header 2 and the overhead console 8, the presence of the phone antenna 10 does not obstruct a forward field of vision of the driver of the vehicle 50, and therefore, blocking the forward field of vision of the driver can be avoided.

The phone antenna 10 illustrated in FIG. 3 is arranged between the front header 2 and an inner mirror 4. The inner mirror 4 is an example of a rearview mirror that is used for the driver of the vehicle 50 to see the rear of the vehicle 50. The inner mirror 4 is installed on the cabin-side surface of the windshield 3. When the phone antenna 10 is arranged between the front header 2 and the inner mirror 4, the presence of the phone antenna 10 does not obstruct a forward field of vision of the driver of the vehicle 50, and therefore, blocking the forward field of vision of the driver can be avoided.

In FIG. 3, the phone antenna 10 includes a substrate 13 in which a radiation element 14 and a ground portion 15 are formed. The radiation element 14 is an antenna conductor through which an excited current flows. The ground portion 15 is a ground pattern for the phone antenna 10. A dielectric (not illustrated) is sandwiched between the radiation element 14 and the ground portion 15. A specific example of the substrate 13 includes a printed board. The ground portion 15 is grounded to the front header 2. Since the ground portion 15 is grounded to the front header 2 and stability of a potential of the ground portion 15 is increased, an antenna gain of the phone antenna 10 can be improved.

Further, since reception sensitivity of radio waves of the radiation element 14 is improved by arranging the radiation element 14 so that a part or all of the radiation element 14 extends in a vertical direction of the vehicle 50 as in FIG. 3, an antenna gain of the phone antenna 10 can be further improved.

The substrate 13 is fixed to the rear surface 2b of the front header 2 by a support member 5 such as a bracket so that the part or the all of the radiation element 14 extends in the vertical direction of the vehicle 50. When the support member 5 is a conductor, the ground portion 15 of the substrate 13 can be easily grounded to the front header 2 via the support member 5.

The phone antenna 10 has directivity of a 360° direction parallel to a horizontal surface (particularly, a front range of the vehicle 50) by arranging the phone antenna 10 so that the part or all of the radiation element 14 extends in the vertical direction of the vehicle 50.

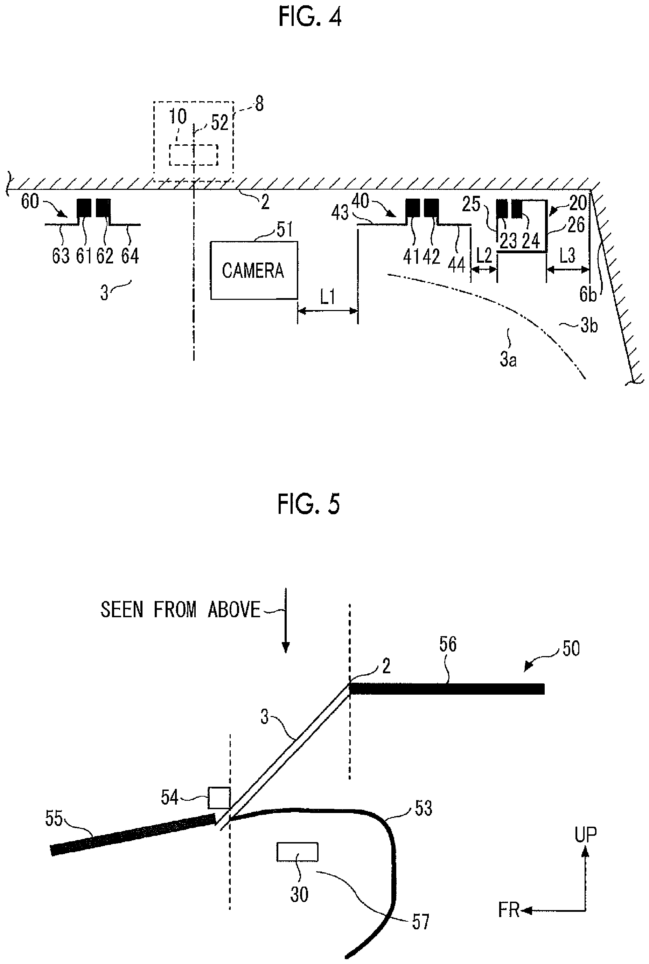

FIG. 4 is a diagram illustrating an example of arrangement of respective antennas provided in the windshield. FIG. 4 is a front view illustrating a windshield 3 attached to the front header 2 in a view from the front of the vehicle 50.

The dedicated short range communication antenna 20 is an example of a glass antenna baked or pasted to the windshield 3. The dedicated short range communication antenna 20 is a pattern antenna including a pair of feeding points 23, 24, an element 25 connected to the feeding point 23, and an element 26 connected to the feeding point 24.

The dedicated short range communication antenna 20 is provided on the windshield 3 so that the elements of the dedicated short range communication antenna 20 extend in a longitudinal direction of the front pillar. Accordingly, it is possible to improve transmission and reception sensitivity of vertically polarized radio waves of the dedicated short range communication antenna 20. In the illustrated case, the element 26 is arranged to extend in a longitudinal direction of the left front pillar 6b.

The dedicated short range communication antenna 20 is arranged in a non-wiping area 3b other than a wiping area 3a of a wiper 54 (FIG. 5) that wipes the windshield 3 in an area of the windshield 3, as illustrated in FIG. 4. A two-dot chain line (partially omitted) illustrated in FIG. 4 indicates a boundary line between the wiping area 3a and the non-wiping area 3b. By arranging the dedicated short range communication antenna 20 in the non-wiping area 3b, a degree of blockade of radio waves transmitted and received by the dedicated short range communication antenna 20 due to a wiping operation of the wiper 54 is further reduced. Therefore, it is possible to further reduce a degree of impairment of directivity of the dedicated short range communication antenna 20 in a longitudinal direction of the vehicle 50. Further, it is preferable for the dedicated short range communication antenna 20 to be arranged in an upper area on the passenger seat side in the area of the windshield 3. Thus, it is possible to further reduce a degree of blockade of a field of vision of the driver due to the presence of the dedicated short range communication antenna 20.

By providing the dedicated short range communication antenna 20 on the windshield 3, it is easy to ensure the directivity in the longitudinal direction of the vehicle 50. This is because there is no conductive member on an imaginary straight line passing through the windshield 3 in the longitudinal direction of the vehicle 50.

The vehicle antenna system 100 includes a pair of terrestrial digital television broadcast antennas 40, 60 that function as a diversity antenna. Each of the terrestrial digital television broadcast antennas 40, 60 is an example of a glass antenna provided on the windshield 3, and for example, is baked or pasted on the windshield 3.

The terrestrial digital television broadcast antenna 40 is an example of a first terrestrial digital television broadcast antenna, and is arranged on the left front pillar 6b side relative to a center line 52. The terrestrial digital television broadcast antenna 60 is an example of a second terrestrial digital television broadcast antenna, and is arranged on the right front pillar 6a (see FIGS. 1 and 2) side relative to the center line 52. The center line 52 indicates an imaginary straight line dividing the area of the windshield 3 in a lateral direction.

Each of the terrestrial digital television broadcast antennas 40, 60 is an example of an antenna that transmits and receives radio waves in a frequency band of 435 MHz to 735 MHz, and is connected to a reception device (not illustrated) via a cable such as a coaxial cable.

The terrestrial digital television broadcast antenna 40 includes a pair of feeding points 41, 42, an element 43 connected to the feeding point 41, and an element 44 connected to the feeding point 42. The terrestrial digital television broadcast antenna 60 includes a pair of feeding points 61, 62, an element 63 connected to the feeding point 61, and an element 64 connected to the feeding point 62.

As illustrated in FIG. 4, the terrestrial digital television broadcast antenna 40 is located between the phone antenna 10 and the dedicated short range communication antenna 20 in a front view of the windshield 3. Accordingly, the phone antenna 10, the dedicated short range communication antenna 20, and the terrestrial digital television broadcast antenna 40 can be arranged apart from one another. Therefore, it is possible to further reduce a degree of interference of radio waves among the phone antenna 10, the dedicated short range communication antenna 20, and the terrestrial digital television broadcast antenna 40.

As illustrated in FIG. 4, the phone antenna 10 is located between the terrestrial digital television broadcast antenna 40 and the terrestrial digital television broadcast antenna 60 in the front view of the windshield 3. Accordingly, the phone antenna 10, the terrestrial digital television broadcast antenna 40, and the terrestrial digital television broadcast antenna 60 can be arranged apart from one another. Therefore, it is possible to further reduce a degree of interference of radio waves among the phone antenna 10, the terrestrial digital television broadcast antenna 40, and the terrestrial digital television broadcast antenna 60.

A shortest distance L2 between the terrestrial digital television broadcast antenna 40 and the dedicated short range communication antenna 20 is preferably equal to or longer than 50 mm to further reduce a degree of interference of the radio waves between the terrestrial digital television broadcast antenna 40 and the dedicated short range communication antenna 20. In the illustrated case, the shortest distance L2 indicates a shortest distance between the element 44 and the element 25.

A shortest distance L3 between the dedicated short range communication antenna 20 and the front pillar is preferably equal to or longer than 70 mm to further prevent transmission and reception sensitivity of vertically polarized radio waves of the dedicated short range communication antenna 20 from being degraded. In the illustrated case, the shortest distance L3 indicates a shortest distance between the element 26 and the left front pillar 6b.

A shortest distance L1 between the terrestrial digital television broadcast antenna 40 and the camera 51 is preferably equal to or longer than 100 mm in order to further prevent deterioration of transmission and reception sensitivity of radio waves of the terrestrial digital television broadcast antenna 40 and in order to further reduce an influence of noise caused by the camera 51. In the illustrated case, the shortest distance L1 indicates the shortest distance between a conductive housing of the camera 51 and the element 43. The camera 51 images the front of the vehicle 50 through the windshield 3.

FIG. 5 is a diagram illustrating an example of an arrangement of a GPS antenna. FIG. 5 illustrates a cross-section perpendicular to a straight line in the lateral direction of the vehicle 50. In FIG. 5, "FR" indicates a front of the vehicle 50, and "UP" indicates an upward side of the vehicle 50.

The GPS antenna 30 is provided in an inside 57 of the front instrument panel 53 in the vehicle cabin of the vehicle 50. Thus, the GPS antenna 30 does not protrude to the upper surface of the roof 56 of the vehicle 50. Therefore, it is possible to reduce a vehicle height and air resistance, as compared with an aspect in which the GPS antenna 30 is provided on the upper surface of the roof 56.

The GPS antenna 30 is arranged between the front header 2 of the vehicle 50 and a storage position of the wiper 54 that wipes the windshield 3 when the vehicle 50 is seen from above, as illustrated in FIG. 5. With the arrangement as described above, a degree of blockade of radio waves transmitted and received by the GPS antenna 30 due to a conductive member such as a bonnet 55, the wiper 54, or the front header 2 is further reduced. Therefore, it is possible to further reduce a degree of impairment of upward directivity of the vehicle 50 of the GPS antenna 30.

The vehicle antenna system has been described above using the embodiments, but the present disclosure is not limited to the embodiments. Various modifications and improvements such as a combination or substitution of some or all of other embodiments can be made within the scope of the present disclosure.

For example, the GPS antenna 30 may be an antenna for both of car navigation and dedicated short range communication. In this case, the GPS antenna 30 is connected to a car navigation ECU and a dedicated short range communication ECU via a distributor.

## Claims

1. A vehicle antenna system (100) comprising:
a mobile phone antenna (10) provided in a front header (2) of a vehicle (50); and
a dedicated short range communication antenna (20) provided in a windshield (3) of the vehicle (50).

2. The vehicle antenna system (100) according to claim 1, wherein the front header (2) includes a front surface (2a) to which the windshield (3) of the vehicle (50) is attached, and a rear surface (2b) opposite to the front surface (2a), and the mobile phone antenna (10) is arranged on the rear surface (2b) side.

3. The vehicle antenna system (100) according to claim 2, wherein the mobile phone antenna (10) is arranged between the front header (2) and an overhead console (8) arranged in a front center portion of a cabin ceiling of the vehicle (50) in a front view of the windshield (3).

4. The vehicle antenna system (100) according to any one of claims 1 to 3, wherein the mobile phone antenna (10) includes a substrate (13) on which a radiation element (14) and a ground portion (15) are formed, and the ground portion (15) is grounded to the front header (2).

5. The vehicle antenna system (100) according to any one of claims 1 to 4, further comprising a terrestrial digital television broadcast antenna (40) provided in the windshield (3),
wherein the terrestrial digital television broadcast antenna (40) is located between the mobile phone antenna (10) and the dedicated short range communication antenna (20) in a front view of the windshield (3).

6. The vehicle antenna system (100) according to any one of claims 1 to 4, further comprising:
a first terrestrial digital television broadcast antenna (40) provided in the windshield (3); and
a second terrestrial digital television broadcast antenna (60) provided in the windshield (3), wherein:
the first terrestrial digital television broadcast antenna (40) is located between the mobile phone antenna (10) and the dedicated short range communication antenna (20) in a front view of the windshield (3); and
the mobile phone antenna (10) is located between the first terrestrial digital television broadcast antenna (40) and the second terrestrial digital television broadcast antenna (60) in the front view of the windshield (3).

7. The vehicle antenna system (100) according to any one of claims 1 to 6, further comprising a global positioning system antenna (30) provided in an inside of a front instrument panel (53) of the vehicle (50).

8. The vehicle antenna system (100) according to claim 7, wherein the global positioning system antenna (30) is arranged between the front header (2) of the vehicle (50) and a storage position of a wiper (54) that wipes the windshield (3) of the vehicle (50) when the vehicle (50) is seen from above.

9. A vehicle antenna system (100) comprising:
a dedicated short range communication antenna (20) provided in a windshield (3) of a vehicle (50); and
a global positioning system antenna (30) provided in an inside of a front instrument panel (53) of the vehicle (50).

10. The vehicle antenna system (100) according to any one of claims 1 to 7 and 9, wherein the dedicated short range communication antenna (20) is arranged in a non-wiping area (3b) other than a wiping area (3a) of a wiper (54) that wipes the windshield (3) in an area of the windshield (3) of the vehicle (50).

11. The vehicle antenna system (100) according to claim 9, wherein the global positioning system antenna (30) is arranged between a front header (2) of the vehicle (50) and a storage position of a wiper (54) that wipes the windshield (3) of the vehicle (50) when the vehicle (50) is seen from above.

12. A vehicle antenna system (100) comprising:
a mobile phone antenna (10) provided in a front header (2) of a vehicle (50); and
a global positioning system antenna (30) provided in an inside of a front instrument panel (53) of the vehicle (50).

13. The vehicle antenna system (100) according to claim 12, wherein the global positioning system antenna (30) is arranged between the front header (2) of the vehicle (50) and a storage position of a wiper (54) that wipes a windshield (3) of the vehicle (50) when the vehicle (50) is seen from above.
